# EUROPÄISCHE PATENTSCHRIFT

(11) **EP 0 425 950 B1**
(45) Veröffentlichungstag und Bekanntmachung des Hinweises auf die Patenterteilung: **14.07.1993**
(21) Anmeldenummer: 90120155.8
(22) Anmeldetag: 20.10.1990
(51) Int. Cl.: B65D 90/04, F16L 58/14, E02D 31/00

(54) **Unter Verwendung von Glasscheiben oder Glasschalen errichtetes Bauwerk.**
Construction erected from plates or shells of glass.
Construction érigée à partir de feuilles ou de coques de verre.

(30) Priorität: 21.10.1989 DE 3935172; 29.03.1990 DE 4010129
(43) Veröffentlichungstag der Anmeldung: 08.05.1991
(73) Patentinhaber: FLACHGLAS CONSULT GMBH, D-45884 Gelsenkirchen (DE); Philipp Holzmann AG, 60329 Frankfurt (DE)
(72) Erfinder: Kallinich, Dietmar, Dipl.-Ing., W-4650 Gelsenkirchen (DE); Kahlert, Wolfgang, Dipl.-Phys., W-4620 Castrop-Rauxel (DE); Wind, Heinz, Dipl.-Ing., W-6242 Kronerg/TS (DE); Lehmann, Friedrich, W-4047 Dormagen 11 (DE)
(74) Vertreter: Andrejewski, Walter

(56) Entgegenhaltungen:
- EP-A- 0 277 535
- DE-A- 1 909 827
- DE-A- 3 801 826
- DE-C- 3 724 882
- DE-C- 3 821 111
- FR-A- 2 600 749
- US-A- 1 355 360

## Beschreibung

Die Erfindung betrifft ein aus einem umfangsgeschlossenen Betonmantel und einem Innenmantel bestehendes Bauwerk in Form eines Behälters, bei dem der Innenmantel nach Maßgabe der Krümmung des Betonmantels aus gekrümmten Glaselementen besteht. - Der Ausdruck Behälter umfaßt im Rahmen der Erfindung auch Behälterelemente und Rohraggregate.

Der bekannte Behälter des beschriebenen Aufbaus, von dem die Erfindung ausgeht (DE-C-37 24 882), ist ein Betonbauwerk, bei dem der Innenmantel eine Auskleidung ist. Die Auskleidung besteht aus gekrümmten Glaselementen, die in mehreren Lagen fugenversetzt und dadurch weitgehend permeationsdicht angeordnet und miteinander sowie mit dem Betonmantel verklebt sind. Der Betonmantel trägt die Auskleidung. Erfährt der Betonmantel Veränderungen, die z. B. erdsenkungsbedingt sind, so teilen sich diese den gekrümmten Glaselementen unmittelbar mit. Das erzeugt Zwänge, die Risse und Sprünge hervorrufen können und die Permeationsdichtheit beeinträchtigen. Bei Ganzglasfassaden, die als "structural glazing" aufgebaut sind, ist es bekannt (DE-A-38 01 826), die Glasscheiben unmittelbar aufeinander zu setzen, so daß sie eine vertikale und insoweit statisch einheitliche, auf einem Fundament oder dergleichen aufgestellte Platte bilden, die über Ausgleichsmittel an die Wand des Bauwerkes angeschlossen ist. Das läßt sich auf Behälter des eingangs beschriebenen Aufbaus nicht ohne weiteres übertragen. Als Auskleidung von doppelwandigen Behältern, wie Öltanks, ist es bekannt (DE-A-19 09 827), in diese eine praktisch selbsttragende Innenhülse einzubauen, die aus steifelastischen Platten mit Hilfe von im Querschnitt H-förmigen Schienen zusammengesetzt ist. Die Innenhülse stützt sich im übrigen durch Anlage an der Behälterinnenwand unmittelbar ab. Sie ist ein Hilfsmittel für die Durchführung von Leckagekontrollen.

Der Erfindung liegt die Aufgabe zugrunde, ein Bauwerk des eingangs beschriebenen Aufbaus in der Form eines Behälters zu schaffen, bei dem Veränderungen des Betonmantels sich nicht störend und die Abdichtung beeinträchtigend den Glasschalen mitteilen.

Zur Lösung dieser Aufgabe lehrt die Erfindung, daß die Glaselemente aus Glasschalen bestehen, die zu einer unter Zwischenschaltung von Ausgleichsmitteln umfangsmäßig geschlossenen, einheitlichen Schale im Sinne der Statik zusammengesetzt sind, und daß die Schale mit Abstand von der Innenwand des Betonmantels angeordnet ist, wobei die Glasschalen unter Zwischenschaltung von Ausgleichsmitteln außerdem an den Betonmantel angeschlossen sind. Nach bevorzugter Ausführungsform der Erfindung sind die Ausgleichsmittel zwischen den Glasschalen und dem Betonmantel als Hinterfüllmasse ausgeführt und ist die Schale durch die Hinterfüllmasse unter Druckvorspannung gesetzt. Diese Druckvorspannung kann auf besondere Weise erzeugt werden, wie weiter unten dargelegt wird. Es versteht sich, daß mit der Druckvorspannung die einzelnen Glasschalen auch gegen die in die Schale integrierten Dichtungsprofile gepreßt werden. - Der Ausdruck Glasschale bezeichnet eine gebogene Glasscheibe und ist insoweit in Übereinstimmung mit den Begriffen der Schalenstatik, die auch bei statisch einheitlichen Schalen angewendet wird, die aus mehreren Schalenelementen zusammengesetzt sind. Die einzelne Glasscheibe ist in Grenzen elastisch verformbar. Ihre Theorie entspricht der Biegetheorie der Schalen der klassischen Bauingenieurkunst.

Im einzelnen bestehen im Rahmen der Erfindung mehrere Möglichkeiten der weiteren Ausbildung und Gestaltung. Das gilt insbesondere für die Ausführungsform, bei der der Betonmantel einem Rohraggregat angehört. Eine bevorzugte Ausführungsform der Erfindung ist in diesem Zusammenhang dadurch gekennzeichnet, daß die Schale an singulären Stellen, z. B. an den Glasschalen des unteren Schalenbereiches, mit Montagestützen an die Innenwand des Betonmantels angeschlossen ist und die Montagestützen in die Hinterfüllmasse eingebettet sind. Das wird dadurch erreicht, daß bei der Herstellung zunächst die Montagestützen angeordnet werden und eine nachträgliche Hinterfüllung durchgeführt wird. Die Montagestützen erfüllen jedoch eine zusätzliche stabilisierende Funktion auch bei dem fertigen Bauwerk.

Der Aufbau der Schale ist im Rahmen der Erfindung grundsätzlich beliebig. Die Schale besteht nach bevorzugter Ausführungsform der Erfindung aus mehreren Schalenringen, die mit in Umfangsrichtung verlaufenden Dichtungsprofilen oder Verbindungskonstruktionen aus Glasschalen-Zwischenstücken abgedichtet aneinander angeschlossen sind. Durch hohe Festigkeit und Stabilität ausgezeichnet ist eine Ausführungsform, die dadurch gekennzeichnet ist, daß die Schalenringe jeweils aus drei Glasschalen bestehen, nämlich einer unteren Basisschale und zwei Anschlußschalen, die in der Firste stoßen, selbstverständlich wiederum unter Zwischenschaltung der Dichtungsprofile.

Arbeitet man nach der Lehre der Erfindung, so ist die Dicke der Glasscheiben grundsätzlich beliebig. Bei der praktischen Erprobung hat sich gezeigt, daß für die meisten Rohraggregate des eingangs beschriebenen Aufbaus und der eingangs angegebenen Zweckbestimmung Glasdicken von 6 bis 12 mm ausreichen.

Bei dem erfindungsgemäßen Bauwerk in der Ausführungsform als Rohraggregat sind zweckmäßigerweise an den Kreuzungspunkten der Dichtungsprofile abdichtende Paßstücke angeordnet und zumindest einige der Paßstücke weisen verschlossene Bohrungen auf, die ausreichend dicht verschlossen sind. Über diese Bohrungen kann die Hinterfüllmasse eingebracht worden sein, über andere Bohrungen kann dabei die Luft entweichen, die sich zwischen dem Gewölbe und dem Rohrmantel befand. Um eine sehr hohe Diffusionsdichtigkeit zu erzielen, lehrt die Erfindung, daß die Dichtungsprofile an die Kanten und/oder Randbereiche der Glasschalen angeklebt sind. Die Dichtungsprofile können einen T-förmigen querschnitt aufweisen, wobei der T-Steg an den Kanten der Glasschalen anliegt und die T-Arme die Glasschalen auf der dem Betonmantel zugewandten Seite unterfassen. Die Hinterfüllmasse besteht beispielsweise aus einem Beton oder Mörtel, der beim Abbinden gequollen ist oder eine Blähung erfahren hat und auf diese Weise die Vorspannung erzeugt. Besonders geeignete Vorspannungen erreicht man, wenn beim Abdichten eine Quellung von etwa 1,2 bis 1,5 % erzielt wird, je nach Einrichtung der Glasschalen. Es versteht sich, daß die Hinterfüllmasse nicht zu hart eingestellt sein soll, sie soll also ausreichend elastisch verformbar sein. Aus diesem Grunde kann die Hinterfüllmasse auch aus Kunststoff, insbesondere Schaumkunststoff, bestehen. Die Glasschalen bestehen zweckmäßigerweise zumindest teilweise aus Sicherheitsglas.

Grundsätzlich kann ein Rohraggregat des beschriebenen Aufbaus auch eingerichtet werden, wenn Betonmäntel in Form von Betonmantelschüssen bereits zu einer Rohrleitung vereinigt unter der Erde verlegt sind. Dann werden die Glasschalen nachträglich eingebracht. Es ist nicht unbedingt erforderlich, die Glasschalen in Längsrichtung der einzelnen Betonmantelschüsse besonders einzurichten. Nichtsdestoweniger wird man im allgemeinen die Anordnung so treffen, daß die Glasschalen in Längsrichtung der einzelnen Betonmantelschüsse eine der Länge der Betonmantelschüsse angepaßte Länge aufweisen.

Eine bevorzugte Ausführungsform der Erfindung ist dadurch gekennzeichnet, daß die betonmantelseitigen Glasscheiben Ausschnitte, Bohrungen oder Fugen mit eingeklebten Halteprofilen aufweisen, in die Befestigungselemente mit Ausgleichsspiel eingesetzt sind, und daß die Befestigungselemente unter Bildung eines Abstandszwischenraumes zwischen Schale und Betonmantel mittelbar oder unmittelbar mit dem Betonmantel verbunden sind. Die Halteprofile und die Befestigungselemente bestehen aus hinreichend korrosionsfesten Werkstoffen. Zum Beispiel sind die Befestigungselemente Schrauben. Der Abstand kann durch in die Wand eingesetzte, aus dieser vorstehende Dübel erzeugt sein. Das beschriebene Ausgleichsspiel erlaubt die Montage der Schale ohne montagebedingte Zwänge. Der beschriebene Aufbau gleicht Veränderungen des Betonmantels aus, die während der Lebensdauer des Bauwerkes entstehen. Die Glasscheiben sind im übrigen wie im Glasbau üblich dimensioniert und angeordnet.

Im einzelnen bestehen im Rahmen der Erfindung mehrere Möglichkeiten der weiteren Ausbildung und Gestaltung. Nach bevorzugter Ausführungsform der Erfindung weisen die Halteprofile einen hutförmigen Querschnitt mit Flanschen auf, die beidseits der Ausschnitte oder Fugen zwischen den Glasscheiben eingeklebt sind. Die Halteprofile können zur Bildung des Ausgleichsspiels wandseitig einen Schlitz oder Langlöcher aufweisen, die von den Schäften der Befestigungselemente durchfaßt und von den Köpfen der Befestigungselemente hinterfaßt sind. Es empfiehlt sich, zwischen den Halteprofilen und den anschließenden Glasscheiben einerseits, dem Betonmantel andererseits, zu den Glasscheiben hin Auflagerplatten und zu dem Betonmantel hin Distanzscheiben anzuordnen, die von den Befestigungselementen durchfaßt sind. Im Rahmen der Erfindung liegt es, den Abstandszwischenraum mit einer Vergußmasse auszugießen. Dabei kann es sich um Vergußmörtel, eine bituminöse Masse, um Schaumbeton oder auch um Schaumkunststoff handeln.

Es versteht sich, daß man sowohl für die Ausführungsform als Rohraggregat als auch für die Ausführungsform als Behälter die einheitliche Schale im Sinne der Statik als Teilbauwerk vorfertigen kann, z. B. als Rohrschuß aus Glasschalen, der in den Betonmantel eingebracht wird. Dabei kann der Rohrschuß auch aus zwei oder mehr mit versetzten Fugen angeordneten Glasschalen bestehen.

Im folgenden wird die Erfindung anhand einer lediglich ein Ausführungsbeispiel darstellenden Zeichnung ausführlicher erläutert. Es zeigen in schematischer Darstellung
- Fig. 1: eine Ansicht eines Bauwerkes in Form eines erfindungsgemäßen Rohraggregates in Achsrichtung,
- Fig. 2: in gegenüber der Fig. 1 verkleinertem Maßstab einen perspektivischen Einblick in das Rohraggregat der Fig. 1,
- Fig. 3: einen Schnitt in Richtung A-A durch den Gegenstand nach Fig. 2,
- Fig. 4: einen Schnitt in Richtung B-B durch den Gegenstand nach Fig. 2,
- Fig. 5: in einem Längsschnitt durch ein Rohraggregat die Stoßstelle zwischen zwei Rohraggregatschüssen,
- Fig. 6: einen querschnitt durch ein erfindungsgemäßes Bauwerk in Form eines Behälters,
- Fig. 7: den vergrößerten Ausschnitt A aus dem Gegenstand der Fig. 6 und
- Fig. 8: einen Schnitt in Richtung B-B durch den Gegenstand der Fig. 7.

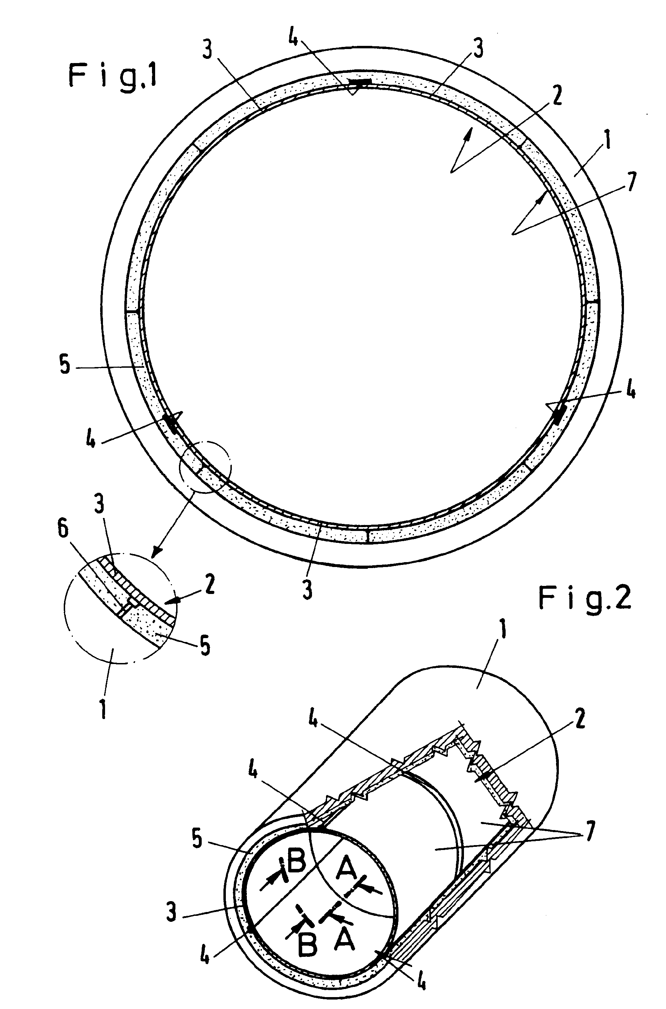

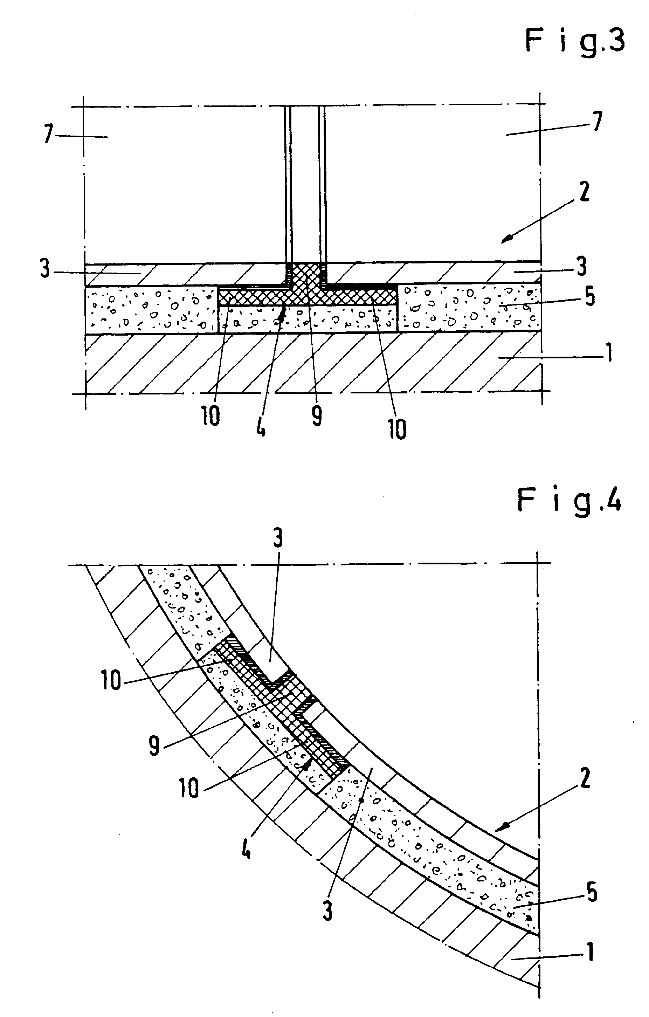

Aus einer vergleichenden Betrachtung der Fig. 1 und 4 entnimmt man ein Rohraggregat, das einen umfangsgeschlossenen Betonmantel 1 und einen Innenmantel 2 aufweist. Der Innenmantel 2 besteht aus nach Maßgabe der Krümmung des Betonmantels 1 gekrümmten Glasschalen 3. Die Glasschalen 3 sind zu einer unter Zwischenschaltung von Ausgleichsmitteln 4, 8 umfangsmäßig geschlossenen, einheitlichen Schale 3, 4, 8 im Sinne der Statik zusammengesetzt. Die Schale 3, 4, 8 ist mit Abstand von der Innenwand des Betonmantels 1 angeordnet, wobei die Glasschalen 3 unter Zwischenschaltung von Ausgleichsmitteln 5 außerdem an den Betonmantel 1 angeschlossen sind. Nach bevorzugter Ausführungsform und im Ausführungsbeispiel sind die Ausgleichsmittel 5 zwischen den Glasschalen 3 und dem Betonmantel 1 als Hinterfüllmasse ausgeführt. Über die Hinterfüllmasse 5, die entsprechend eingerichtet wurde, ist die Schale 3, 4, 8 unter Druckvorspannung gesetzt.

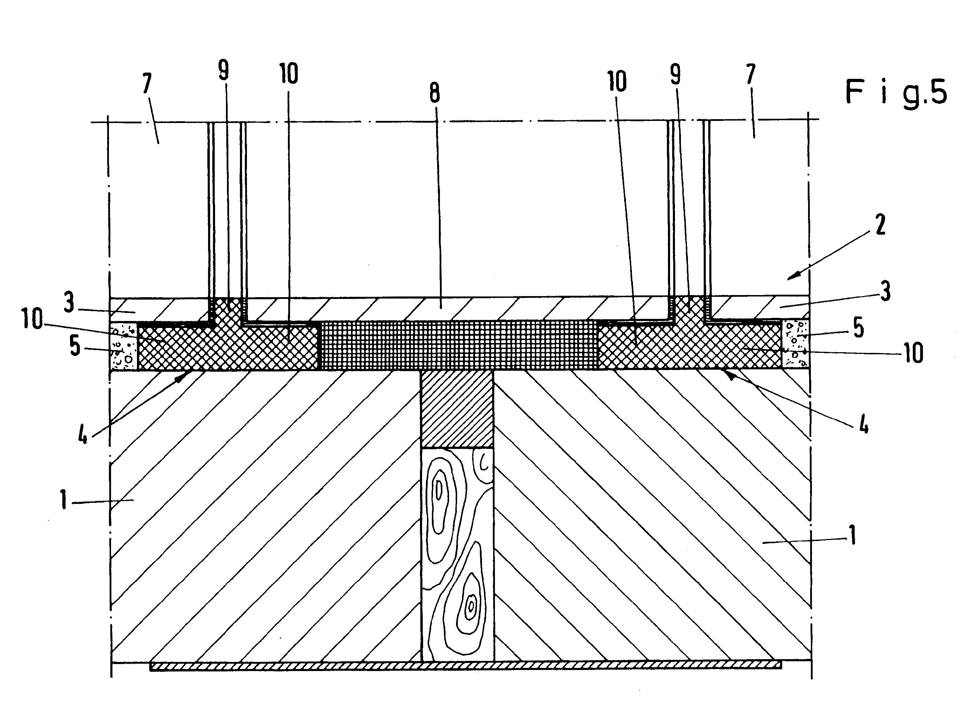

In der Fig. 1 wurde an einem vergrößerten Ausschnitt unten angedeutet, daß die Schale 3, 4, 8 an singulären Stellen mit Montagestützen 6 an die Innenwand des Betonmantels 1 angeschlossen ist und die Montagestützen 6 in die Hinterfüllmasse 5 eingebettet sind. Die Schale 3, 4, 8 besteht, wie insbesondere die Fig. 2 erkennen läßt, aus mehreren Schalenringen 7, die mit in Umfangsrichtung verlaufenden Dichtungsprofilen 4 oder Verbindungskonstruktionen aus Glasschalen-Zwischenstücken 8 abgedichtet aneinander angeschlossen sind. Dichtungsprofile 4 bezeichnet Profile aus einem geeigneten Dichtungswerkstoff mit entsprechender Profilierung. In bezug auf die Glasschalen-Zwischenstücke 8 wird auf die Fig. 5 verwiesen. Die Schalenringe 7 bestehen im Ausführungsbeispiel jeweils aus drei Glasschalen 3, nämlich einer unteren Basisschale und zwei Anschlußschalen, die in der Firste, anders ausgedrückt längs einer Scheitellinie, stoßen, und zwar wie beschrieben unter Zwischenschaltung der Dichtungsprofile 4. Die Basisschale kann auch als Sohlschale bezeichnet werden. An den Kreuzungspunkten der Dichtungsprofile 4 sind abdichtende Paßstücke angeordnet und zumindest einige der Paßstücke weisen verschlossene Bohrungen auf, was im einzelnen nicht gezeichnet wurde. Die Dichtungsprofile 4 sind an die Kanten und/oder Randbereiche der Glasschalen 3 angeklebt. Sie besitzen im Ausführungsbeispiel und nach bevorzugter Ausführungsform der Erfindung einen T-förmigen Querschnitt, wobei der T-Steg 9 an den Kanten der Glasschale 3 anliegt und die T-Arme 10 die Glasschalen 3 auf der dem Betonmantel 1 zugewandten Seite unterfassen. Die Hinterfüllmasse 5 besteht aus Beton, beispielsweise aus gequollenem Beton oder Flachbeton zum Zwecke der Erzeugung der Druckvorspannung, oder aber beispielsweise aus Schaumkunststoff. Der Ausdruck Beton umfaßt auch Mörtel, insbesondere Verpreßmörtel. Die Basisglasschale kann aus Sicherheitsglas, insbesondere aus Einscheiben-Sicherheitsglas, welches thermisch oder chemisch vorgespännt ist, bestehen. Die Anordnung ist im Ausführungsbeispiel so getroffen, daß bei einem Betonmantel, der aus mehreren Betonmantelschüssen besteht, die Glasschalen 3 in Längsrichtung der einzelnen Betonmantelschüsse eine der Länge der Betonmantelschüsse angepaßte Länge aufweisen, jedoch, wie in Fig. 5 erkennbar, mit freien Überständen der Betonmantelschüsse, die dazu dienen, in der beschriebenen Weise Rohraggregatschüsse aneinander anzuschließen.

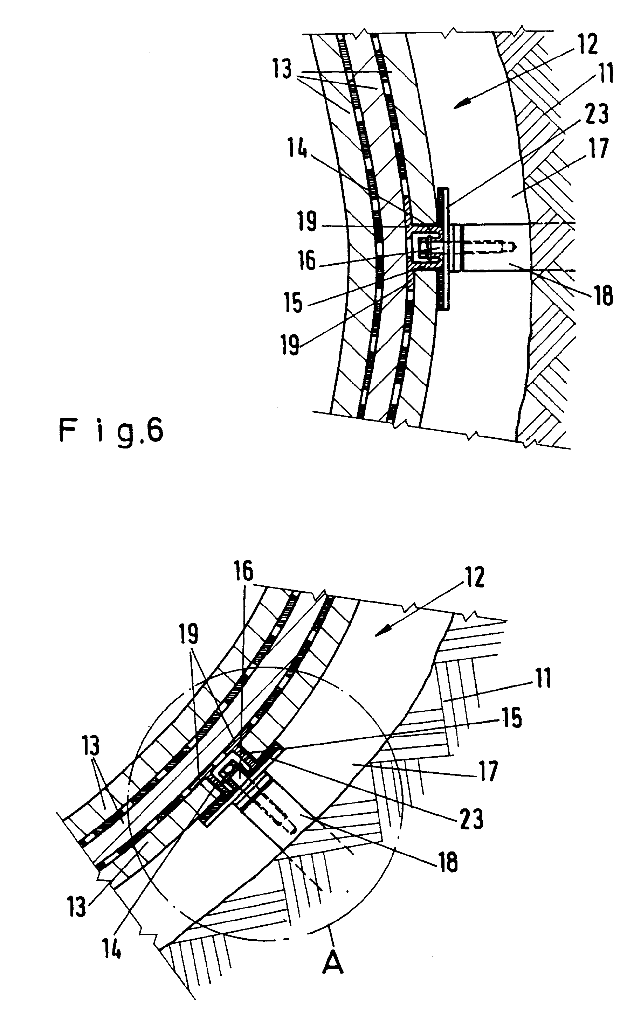

Bei dem in den Fig. 6 bis 8 ausschnittsweise dargestellten Bauwerk weisen die betonmantelseitigen Glasscheiben 13 Ausschnitte, Bohrungen oder Fugen 14 mit eingeklebten Halteprofilen 15 auf, in die Befestigungselemente in Form von Befestigungsschrauben 16 mit Ausgleichsspiel eingesetzt sind.

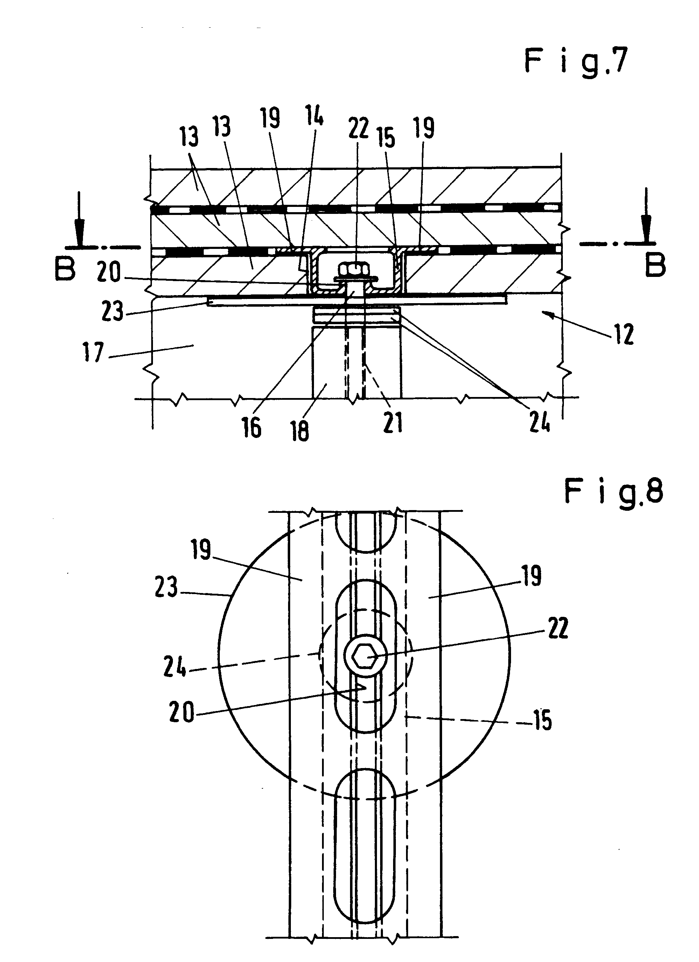

In Ausführungsbeispiel ist nur ein solches Halteprofil 15 mit einer Befestigungsschraube 16 dargestellt worden. Man entnimmt aus den Fig. 6 und 7, daß im Ausführungsbeispiel die Befestigungsschrauben 16 unter Bildung eines Abstandszwischenraumes 17 zwischen Schale 12 und Betonmantel 11 mittelbar mit dem Betonmantel 11 verbunden sind. Sie sind in einen in den Betonmantel 11 eingesetzten Dübel 18 als Abstandshalter eingeschraubt. Die Halteprofile 15 besitzen einen hutförmigen Querschnitt mit Flanschen 19, die zwischen aufeinandergeklebten Glasscheiben 13 eingeklebt sind. In der Fig. 8 erkennt man, daß die Halteprofile 15 betonmantelseitig einen Schlitz 20 oder Langlöcher aufweisen, die von den Schäften 21 der Befestigungsschrauben 16 durchfaßt und von den Köpfen 22 der Befestigungsschrauben 16 hinterfaßt sind. Zwischen den Halteprofilen 15 und den anschließenden Glasscheiben 13 einerseits, den Dübeln 18 andererseits, sind zu den Glasscheiben 13 hin Auflagerplatten 23 und zu den Dübeln 18 hin Distanzscheiben 24 angeordnet, die von den Befestigungsschrauben 16 durchfaßt sind. Der Abstandszwischenraum 17 könnte mit einer Vergußmasse ausgefüllt sein, die hinreichend vorformungsfähig ist und z. B. aus Vergußmörtel oder Schaumkunststoff besteht.

## Patentansprüche

1. Aus einem umfangsgeschlossenen Betonmantel (1) und einem Innenmantel (2) bestehendes Bauwerk in Form eines Behälters, bei dem der Innenmantel (2) nach Maßgabe der Krümmung des Betonmantels (1) aus gekrümmten Glaselementen besteht, **dadurch gekennzeichnet**, daß die Glaselemente aus Glasschalen (3) bestehen, die zu einer unter Zwischenschaltung von Ausgleichsmitteln (4, 8) umfangsmäßig geschlossenen, einheitlichen Schale im Sinne der Statik zusammengesetzt sind, und daß die Schale (3, 4, 8) mit Abstand von der Innenwand des Betonmantels (1) angeordnet ist, wobei die Glasschalen (3) unter Zwischenschaltung von weiteren Ausgleichsmitteln (5) außerdem an den Betonmantel (1) angeschlossen sind.

2. Bauwerk nach Anspruch 1, dadurch gekennzeichnet, daß die weiteren Ausgleichsmittel (5) zwischen den Glasschalen (3) und dem Betonmantel (1) als Hinterfüllmasse ausgeführt und die Schale (3, 4, 8) durch die Hinterfüllmasse unter Druckvorspannung gesetzt ist.

3. Bauwerk nach Anspruch 2, dadurch gekennzeichnet, daß die Schale (3, 4, 8) an singulären Stellen, z. B. an Glasschalen (3) des unteren Schalenbereiches, mit Montagestützen (6) an die Innenwand des Betonmantels (1) angeschlossen ist und die Montagestützen (6) in die Hinterfüllmasse (5) eingebettet sind.

4. Bauwerk nach Anspruch 3, dadurch gekennzeichnet, daß die Schale (3, 4, 8) aus mehreren Schalenringen (7) besteht, die mit in Umfangsrichtung verlaufenden Dichtungsprofilen (4) oder Verbindungskonstruktionen aus Glasschalen-Zwischenstücken (8) abgedichtet aneinander angeschlossen sind.

5. Bauwerk nach Anspruch 4, dadurch gekennzeichnet, daß die Schalenringe (7) jeweils aus drei Glasschalen (3) bestehen, nämlich einer unteren Basisschale und zwei Anschlußschalen, die in der Firste stoßen.

6. Bauwerk nach einem der Ansprüche 4 oder 5, dadurch gekennzeichnet, daß an den Kreuzungspunkten der Dichtungsprofile (4) abdichtende Paßstücke angeordnet sind und zumindest einige der Paßstücke verschlossene Bohrungen aufweisen.

7. Bauwerk nach einem der Ansprüche 4 bis 6, dadurch gekennzeichnet, daß die Dichtungsprofile (4) an die Kanten und/oder Randbereiche der Glasschalen (3) angeklebt sind.

8. Bauwerk nach einem der Ansprüche 4 bis 7, dadurch gekennzeichnet, daß die Dichtungsprofile (4) einen T-förmigen Querschnitt aufweisen, wobei der T-Steg (9) an den Kanten der Glasschalen (3) anliegt und die T-Arme (10) die Glasschalen (3) auf der dem Betonmantel (1) zugewandten Seite unterfassen.

9. Bauwerk nach einem der Ansprüche 2 bis 8, dadurch gekennzeichnet, daß die Hinterfüllmasse (5) aus einem Beton oder Mörtel besteht.

10. Bauwerk nach einem der Ansprüche 2 bis 8, dadurch gekennzeichnet, daß die Hinterfüllmasse (5) aus einem Kunststoff, insbesondere Schaumkunststoff, besteht.

11. Bauwerk nach einem der Ansprüche 1 bis 10, dadurch gekennzeichnet, daß die Glasschalen (3) zumindest teilweise aus Sicherheitsglas bestehen, insbesondere aus Einscheiben-Sicherheitsglas.

12. Bauwerk nach einem der Ansprüche 1 bis 11, dadurch gekennzeichnet, daß bei einem Betonmantel (1), der aus mehreren Betonmantelschüssen besteht, die Glasschalen (3) in Längsrichtung der einzelnen Betonmantelschüsse eine der Länge der Betonmantelschüsse angepaßte Länge aufweisen.

13. Bauwerk nach Anspruch 1, dadurch gekennzeichnet, daß die betonmantelseitigen Glasscheiben (13) der Glasschalen Ausschnitte, Bohrungen oder Fugen (14) mit eingeklebten Halteprofilen (15) aufweisen, in die Befestigungselemente (16) mit Ausgleichsspiel eingesetzt sind, und daß die Befestigungselemente (16) unter Bildung eines Abstandszwischenraumes (17) zwischen Schale (12) und Betonmantel (11) mittelbar oder unmittelbar mit dem Betonmantel (11) verbunden sind.

14. Bauwerk nach Anspruch 13, dadurch gekennzeichnet, daß die Halteprofile (15) einen hutförmigen Querschnitt mit Flanschen (19) aufweisen, die beidseits der Ausschnitte oder Fugen (14) zwischen den Glasscheiben (13) eingeklebt sind.

15. Bauwerk nach einem der Ansprüche 13 oder 14, dadurch gekennzeichnet, daß die Halteprofile (15) betonmantelseitig einen Schlitz (20) oder Langlöcher aufweisen, die von den Schäften (21) der Befestigungselemente (16) durchfaßt und von den Köpfen (22) der Befestigungselemente (16) hinterfaßt sind.

16. Bauwerk nach einem der Ansprüche 13 bis 15, dadurch gekennzeichnet, daß zwischen den Halteprofilen (15) und den anschließenden Glasscheiben (13) einerseits, dem Betonmantel (11) andererseits, zu den Glasscheiben (13) hin Auflagerplatten (23) und zum Betonmantel (11) hin Distanzscheiben (24) angeordnet sind, die von den Befestigungselementen (16) durchfaßt sind.

## Claims

1. A construction in the form of a container, consisting of a peripherally closed concrete casing (1) and an inner casing (2), in which the inner casing (2) consists of glass elements curved in accordance with the curvature of the concrete casing (1), characterised in that the glass elements consist of glass shells (3), which are assembled to form a peripherally closed uniform shell in the static loading sense, with compensating means (4, 8) interposed therebetween, and that the shell (3, 4, 8) is disposed at a distance from the inner wall of the concrete casing (1), wherein the glass shells (3) are in addition seated against the concrete casing (1) with further expansion compensating means (5) disposed therebetween.

2. A construction according to claim 1, characterised in that the further compensating means (5) between the glass shells (3) and the concrete casing (1) are constructed as backfill material, and the shell (3, 4, 8) is placed under an initial compressive stress by the backfill material.

3. A construction according to claim 2, characterised in that the shell (3, 4, 8) is attached to the inner wall of the concrete casing (1) at singular locations, e.g. at glass shells (3) of the underlying shell region, by means of mounting stays (6), and the mounting stays (6) are embedded in the backfill material (5).

4. A construction according to claim 3, characterised in that the shell (3, 4, 8) consists of a plurality of shell rings (7), which are joined to each other sealed by means of sealing sections (4) running in the peripheral direction, or by means of joint constructions comprising glass shell transition pieces (8).

5. A construction according to claim 4, characterised in that the shell rings (7) each consist of three glass shells (3), namely an underlying base shell and two connecting shells which butt together within the ridge.

6. A construction according to one of claims 4 or 5, characterised in that sealing adapter pieces are disposed at the crossing points of the sealing sections (4) and at least some of the adapter pieces have closed holes.

7. A construction according to any one of claims 4 to 6, characterised in that the sealing sections (4) are adhesively bonded to the edges and/or border regions of the glass shells (3).

8. A construction according to any one of claims 4 to 7, characterised in that the sealing sections (4) have a T-shaped cross-section, wherein the stem (9) of the T is seated closely against the edges of the glass shells (3) and the arms (10) of the T engage beneath the glass shells (3) on the sides of the latter facing the concrete casing (1).

9. A construction according to any one of claims 2 to 8, characterised in that the backfill material (5) consists of a concrete or mortar.

10. A construction according to any one of claims 2 to 8, characterised in that the backfill material (5) consists of a plastic, particularly foamed plastic.

11. A construction according to any one of claims 1 to 10, characterised in that the glass shells (3) at least partially consist of safety glass, particularly of toughened or tempered safety glass.

12. A construction according to any one of claims 1 to 11, characterised in that for a concrete casing (1) which consists of a plurality of concrete casing shell rings, the glass shells (3) have a length which is matched to the length of the concrete casing shell rings in the longitudinal direction of the individual concrete casing shell rings.

13. A construction according to claim 1, characterised in that the glass pieces (13) on the concrete casing side of the glass shells have cut-outs, holes or joints (14) with adhesively bonded mounting sections (15) into which fastening elements (16) are inserted with a compensating clearance, and that the fastening elements (16) are attached directly or indirectly to the concrete casing (11) with the formation of an intermediate spacer gap (17) between the shell (12) and the concrete casing (11).

14. A construction according to claim 13, characterised in that the mounting sections (15) have a hat-shaped cross-section, with flanges (19) which are adhesively bonded on both sides to the cut-outs or joints (14) between the glass plates (13).

15. A construction according to one of claims 13 or 14, characterised in that the mounting sections (15) have a slot (20) or elongated holes on the concrete casing side, which slot or elongated holes have the stems (21) of the fastening elements (16) passing through them and are engaged behind by the heads (22) of the fastening elements (16).

16. A construction according to any one of claims 13 to 15, characterised in that support plates (23) facing the glass pieces (13) and distance pieces (24) facing the concrete casing (11), which have the fastening elements (16) passing through them, are disposed between the mounting sections (15) and the adjoining glass pieces (13) on one side and the concrete casing (11) on the other side.

## Revendications

1. Construction constituée par une enveloppe en béton (1) fermée circonférentiellement et une enveloppe intérieure (2) et se présentant sous la forme d'un récipient, dans lequel l'enveloppe intérieure (2) est constituée par des éléments de verre cintrés, d'une manière qui correspond au cintrage de l'enveloppe en béton (1), caractérisée en ce que les éléments de verre sont constitués par des coques en verre (3), qui sont réunies, au sens de la statique, pour former une coque unitaire, fermée sur sa périphérie moyennant l'interposition de moyens de compensation (4, 8), et que la coque (3, 4, 8) est disposée à distance de la paroi intérieure de l'enveloppe en béton (1), les coques en verre (3) étant en outre raccordées à l'enveloppe en béton (1) moyennant l'interposition d'autres moyens de compensation (5).

2. Construction selon la revendication 1, caractérisée en ce que les autres moyens de compensation (5) situés entre les coques en verre (3) et l'enveloppe en béton (1) sont réalisés sous la forme d'une masse de remplissage et que la coque (3, 4, 8) est placée sous une précontrainte de compression par la masse de remplissage.

3. Construction selon la revendication 2, caractérisée en ce que la coque (3, 4, 8) est raccordée à la paroi intérieure de l'enveloppe en béton au moyen de supports de montage (6) en des points singuliers, par exemple au niveau des coques en verre (3) de la partie inférieure de la coque, et que les supports de montage (6) sont noyés dans la masse de remplissage (5).

4. Construction selon la revendication 3, caractérisée en ce que la coque (3, 4, 8) est constituée par plusieurs anneaux de coque (7), qui sont raccordés entre eux d'une manière étanchéifiée à l'aide de profilés d'étanchéité (4) ou de structures de liaison, qui s'étendent dans la direction circonférentielle et sont constitués par des éléments intercalaires des coques de verre.

5. Construction selon la revendication 4, caractérisée en ce que les anneaux (7) de coque sont constitués chacun par trois coques de verre (3), à savoir une coque inférieure de base et deux coques de raccordement, qui sont en aboutement au niveau du toit.

6. Construction selon l'une quelconque des revendications 4 ou 5, caractérisée en ce que des éléments d'ajustement réalisant l'étanchéité sont disposés au niveau des points d'intersection des profilés d'étanchéité (4) et qu'au moins quelques-uns des éléments d'ajustement possèdent des perçages fermés.

7. Construction selon l'une des revendications 4 à 6, caractérisée en ce que les profilés d'étanchéité (4) sont collés sur les bords et/ou sur les zones marginales des coques en verre (3).

8. Construction selon l'une des revendications 4 à 7, caractérisée en ce que tous les profilés d'étanchéité (4) possèdent une section transversale en forme de T, dont le pied (9) s'applique contre les bords des coques en verre (3), tandis que les bras (10) du T s'engagent au-dessous des coques en verre (3), sur la face tournée vers l'enveloppe en béton (1).

9. Construction selon l'une des revendications 2 à 8, caractérisée en ce que la masse de remplissage (5) est formée par un béton ou un mortier.

10. Construction selon l'une des revendications 2 à 8, caractérisée en ce que la masse de remplissage (5) est constituée par une matière plastique, notamment une matière plastique à l'état de mousse.

11. Construction selon l'une des revendications 1 à 10, caractérisée en ce que les coques en verre (3) sont constituées au moins en partie par un verre de sécurité, notamment un verre de sécurité fritté.

12. Construction selon l'une des revendications 1 à 11, caractérisée en ce que, dans le cas d'une enveloppe en béton (1) constituée de plusieurs tronçons, les coques en verre (3) possèdent, dans la direction longitudinale des tronçons individuels de l'enveloppe en béton, une longueur adaptée à la longueur des tronçons de l'enveloppe en béton.

13. Construction selon la revendication 1, caractérisée en ce que les plaques de verre (13), situées du côté de l'enveloppe en béton, des coques en verre comportent des découpes, des perçages ou des joints (14) pourvus de profilés de retenue collés (15) et dans lesquels des éléments de fixation (16) sont insérés avec un jeu de compensation, et que les éléments de fixation (16) sont raccordés indirectement ou directement à l'enveloppe en béton (11) tout en formant un espace intercalaire d'entretoisement (17) entre la coque (12) et l'enveloppe en béton (11).

14. Construction selon la revendication 13, caractérisée en ce que les profilés de retenue (15) possèdent une section transversale en forme de chapeau pourvue de brides (19), qui sont collées des deux côtés des découpes ou des joints (14), entre les plaques de verre (13).

15. Construction selon l'une des revendications 13 ou 14, caractérisée en ce que les profilés de retenue (15) possèdent, du côté de l'enveloppe en béton, une fente (20) ou des trous allongés, que traversent les tiges (21) des éléments de fixation (16) et derrière lesquelles s'engagent les têtes (22) des éléments de fixation (16).

16. Construction selon l'une des revendications 13 à 15, caractérisée en ce qu'entre les profilés de retenue (15) et les plaques de verre raccordées (13) d'une part et l'enveloppe en béton (11) d'autre part, des plaques d'appui (23) sont disposées en direction des plaques de verre (13), et des plaques d'entretoisement (24), qui sont traversées par les éléments de fixation (16), sont disposées en direction de l'enveloppe en béton (11).
